# EUROPÄISCHE PATENTANMELDUNG

(11) **EP 1 816 020 A2**
(43) Veröffentlichungstag der Anmeldung: **08.08.2007**
(21) Anmeldenummer: 07001247.1
(22) Anmeldetag: 20.01.2007
(51) Int. Cl.: B60J 7/14, B60J 7/20

(54) **Cabriolet-Fahrzeug**

(30) Priorität: 01.02.2006 DE 102006005001
(71) Anmelder: Magna Car Top Systems GmbH, 74321 Bietigheim-Bissingen (DE)
(72) Erfinder: Röder, Holger, 73054 Eislingen (DE)

(57) **Zusammenfassung**

Die Erfindung betrifft ein Cabriolet-Fahrzeug (1) mit einem zwischen einer Schließposition (S) und einer Ablageposition (A) verstellbaren Fahrzeugdach (2), wobei das Fahrzeugdach (2) in seiner Ablageposition (A) in einem Verdeckkasten (6) mit Heckdeckel (8) ablegbar ist. Erfindungsgemäß ist vorgesehen, dass ein Verriegelungslenker (15) einer Mehrgelenkkinematik (12) einerseits zwischen einer ersten Verriegelungsstellung und einer ersten Entriegelungsstellung und andererseits zwischen einer zweiten Verriegelungsstellung und einer zweiten Entriegelungsstellung verschwenkbar ist.

## Beschreibung

Die Erfindung betrifft ein Cabriolet-Fahrzeug mit einem mittels eines Heckdeckels verschließbaren Verdeckkasten für ein verstellbares Fahrzeugdach gemäß dem Oberbegriff des Anspruchs 1.

Die DE 199 46 454 A1 beschreibt einen Heckdeckel, der über eine Siebengelenkkinematik mit der Fahrzeugkarosserie verbunden ist. Der Heckdeckel kann wahlweise um seine Vorderkante bzw. um seine Hinterkante angehoben werden, um einerseits die Beladung des Kofferraums und andererseits die Ablage des Fahrzeugdaches zu gewährleisten. Das wahlweise Anheben des Heckdeckels ist jedoch nicht voll automatisch durchführbar. Über den dem Heckdeckel zugeordneten Antriebsmotor wird nur die Anhebung der Vorderkante zum Ablegen des Fahrzeugverdecks unterstützt. Die Aufschwenkbewegung zum Be- und Entladen des Kofferraums kann mit einem zusätzlichen, passiven Federelement, beispielsweise einer Gasdruckfeder unterstützt werden.

Die DE 103 40 017 B3 zeigt einen verbesserten Heckdeckel für ein Cabriolet-Fahrzeug. Dabei ist der Heckdeckel ebenfalls über eine Siebengelenkkinematik an die Fahrzeugkarosserie gekoppelt. Im Unterschied zu dem aus der DE 199 46 454 A1 bekannten Heckdeckel können beide Öffnungsbewegungen des Heckdeckels, also sowohl das Anheben der Hinterkante als auch das Anheben der Vorderkante mit derselben Siebengelenkkinematik durchgeführt werden, die von nur einem Antriebselement zu betätigen ist. Dies wird dadurch erreicht, dass die Siebengelenkkinematik einen Verriegelungslenker umfasst, der zwischen einer Verriegelungsstellung und einer Entriegelungsstellung verstellt werden kann und in Verriegelungsstellung an der Fahrzeugkarosserie gehalten ist, jedoch über ein Drehgelenk gegenüber der Fahrzeugkarosserie verschwenkt werden kann. Der Verriegelungslenker wird zum Beund Entladen des Kofferraums in seine Verriegelungsstellung überführt. Zugleich wird die heckseitige Verriegelung gelöst, so dass die Hinterkante des Heckdeckels angehoben werden kann. Zur Ablage des Fahrzeugdachs wird dagegen der Verriegelungslenker in die Entriegelungsstellung verstellt, in welcher das betreffende, an die Karosserie gekoppelte Drehgelenk entriegelt ist, so dass die Bindung des Verriegelungslenkers über dieses Gelenk an die Fahrzeugkarosserie aufgehoben ist. In der Entriegelungsstellung des Verriegelungslenkers kann somit der Heckdeckel um sein heckseitiges Drehgelenk aufgeschwenkt werden, wodurch die Vorderkante des Heckdeckels angehoben wird. Das heckseitige Drehgelenk ist zwischen Heckdeckel und Fahrzeugkarosserie angeordnet. Hierdurch ist es notwendig, den Heckdeckel und die Fahrzeugkarosserie, insbesondere den heckseitigen Stoßfänger derart auszubilden, dass eine Verschwenkung des Heckdeckels um das heckseitige Drehgelenk möglich ist. Insbesondere muss in dem Stoßfänger eine Ausbuchtung vorgesehen werden, damit der Heckdeckel bei seiner Verschwenkbewegung nicht mit dem Stoßfänger oder anderen Fahrzeugbauteilen kollidiert. Gegebenenfalls ist es möglich, das heckseitige Drehgelenk über eine eigenständige Viergelenkkinematik vor dem Verschwenkvorgang von der Fahrzeugkarosserie abzuheben. In diesem Fall müsste jedoch ein zusätzlicher Antrieb vorgesehen werden. Weiterhin nachteilig bei dem bekannten Heckdeckel ist es, dass der Heckdeckel Bestandteil der Siebengelenkkinematik ist, also entsprechend steif und tragfähig ausgebildet werden muss.

Der Erfindung liegt die Aufgabe zugrunde, ein alternatives Cabriolet-Fahrzeug mit einem wahlweise automatisch entweder mit seiner Vorderkante oder mit seiner Hinterkante über eine Mehrgelenkkinematik anhebbaren Heckdeckel zu schaffen, wobei die Heckkante ohne einen zusätzlichen Antrieb oder eine zusätzliche Kinematik vorsehen zu müssen, beim Anheben der Vorderkante von der Fahrzeugkarosserie abgehoben wird, und wobei das Fahrzeugdesign weitgehend unabhängig von der Ausgestaltung der Mehrgelenkkinematik ausgebildet werden kann.

Diese Aufgabe wird mit den Merkmalen des Anspruches 1 gelöst.

Vorteilhafte Weiterbildungen der Erfindung sind in den Unteransprüchen angegeben.

Der Erfindung liegt der Gedanke zugrunde, das heckseitige Drehgelenk nicht mehr dem Heckdeckel, sondern dem Verriegelungslenker zuzuordnen. Je nach Ausformung des Verriegelungslenkers kann das heckseitige Drehgelenk somit an einer beliebigen Position an der Fahrzeugkarosserie angebunden werden. Die Position des heckseitigen Drehgelenks ist nicht mehr auf die Anordnung zwischen Heckdeckel und Fahrzeugkarosserie beschränkt. Hierdurch ist es möglich, die Form des Heckdeckels, die Form der Karosserie sowie die Form des Stoßfängers unabhängig von dem Bewegungsradius des Heckdeckels beim Aufschwenken der Vorderkante um das heckseitige Drehgelenk auszubilden.

Erfindungsgemäß kann der Verriegelungslenker nicht nur in seinem vorderen Bereich mit der Fahrzeugkarosserie verriegelt werden, sondern auch in seinem hinteren Bereich. Der Heckdeckel ist also zwischen einer ersten Verriegelungsstellung und einer ersten Entriegelungsstellung sowie zwischen einer zweiten Verriegelungsstellung und einer zweiten Entriegelungsstellung verschwenkbar. Zum Be- und Entladen des Kofferraums wird der Verriegelungslenker in seine erste Verriegelungsstellung überführt, in der er an der Fahrzeugkarosserie gehalten ist, jedoch über ein vorderes Drehgelenk gegenüber der Fahrzeugkarosserie verschwenkt werden kann. Zugleich wird die zweite, heckseitige Verriegelung des Verriegelungslenkers gelöst, so dass der Verriegelungslenker und damit die Hinterkante des Heckdeckels angehoben werden kann. Zur Ablage des Fahrzeugdachs wird dagegen der Verriegelungslenker in die erste Entriegelungsstellung sowie die zweite Verriegelungsstellung verstellt. In der zweiten Verriegelungsstellung ist der Verriegelungslenker über das heckseitige Drehgelenk verschwenkbar mit der Fahrzeugkarosserie verbunden. Die Bindung des Verriegelungslenkers an die Fahrzeugkarosserie über das vordere Drehgelenk ist aufgehoben, so dass der Verriegelungslenker um das heckseitige Drehgelenk verschwenkbar ist, wobei die Vorderkante des Heckdeckels angehoben wird, um eine Verschwenkbewegung des Fahrzeugdachs in seine Schließ- oder Ablageposition zu ermöglichen. Dadurch, dass nicht unmittelbar der Heckdeckel über das heckseitige Drehgelenk an die Fahrzeugkarosserie angebunden ist, wird der Heckdeckel beim Verschwenken des Verriegelungslenkers um das heckseitige Drehgelenk durch die Mehrgelenkkinematik ein Stück weit von der Fahrzeugkarosserie und von dem Stoßfänger abgehoben, so dass eine Kollision des Heckdeckels mit weiteren Fahrzeugbauteilen bei dieser Verschwenkbewegung vermieden wird.

Beide Öffnungsbewegungen des Heckdeckels können mit derselben Mehrgelenkkinematik durchgeführt werden, die von nur einem Antriebselement zu betätigen ist. Zum Anheben des Heckdeckels bei der Verschwenkbewegung um das heckseitige Drehgelenk wird keine zusätzliche Kinematik und kein zusätzlicher Antrieb benötigt.

Bevorzugt ist sowohl dem vorderen als auch dem hinteren Drehgelenk eine automatische Verriegelungseinheit zugeordnet. Mithilfe der automatischen Verriegelungseinheiten können je nachdem, ob die hintere Kante des Heckdeckels oder die vordere Kante des Heckdeckels angehoben werden sollen, das vordere bzw. das hintere Drehgelenk automatisch mittels eines Stellmotors ver- bzw. entriegelt werden.

In Ausgestaltung der Erfindung ist vorgesehen, dass mindestens eine, vorzugsweise sämtliche Verriegelungseinheiten als Drehfalle ausgebildet sind. Die Drehfalle ist bevorzugt mittels eines Elektromotors zwischen zwei Drehendlagen verschwenkbar, wobei die Drehfalle in der ersten Drehendlage den Verriegelungslenker freigibt und in der zweiten Verriegelungsendlage drehbar an die Karosserie anbindet.

Bei geschlossenem Heckdeckel sind beide Verriegelungseinheiten verriegelt, der Verriegelungslenker ist also an beiden Enden fest mit der Karosserie verbunden. Bei beidseitig verriegeltem Verriegelungslenker weist die Mehrgelenkkinematik keine Freiheitsgrade auf. Um ein gefährliches Ablösen der gesamten Mehrgelenkkinematik von der Fahrzeugkarosserie zu vermeiden, ist in Weiterbildung der Erfindung eine Steuereinheit vorgesehen, die ein gleichzeitiges Entriegeln beider Verriegelungseinheiten während des Fahrbetriebs verhindert. Für Reparaturarbeiten ist es denkbar, beide Verriegelungseinheiten zu lösen, um den Verriegelungslenker bzw. die gesamte Mehrgelenkkinematik entnehmen zu können.

Um ein Abheben des Heckdeckels während der Fahrt sowie störende Geräusche zu vermeiden, ist in Weiterbildung der Erfindung mindestens ein erster Verriegelungsmechanismus vorgesehen, mit dem die Mehrgelenkkinematik zusätzlich mit der Fahrzeugkarosserie verriegelbar ist. Zusätzlich ist bevorzugt mindestens ein zweiter Verriegelungsmechanismus vorgesehen, mit der der Heckdeckel in verschlossenem Zustand an die Fahrzeugkarosserie angebunden ist. Zum Anheben der Hinterkante des Heckdeckels muss zunächst dieser zweite Verriegelungsmechanismus, beispielsweise über ein mittels des Fahrzeugschlüssels zu entriegelndes Schloss entriegelt werden.

Die Mehrgelenkkinematik wird vorteilhaft über einen Antriebslenker der Mehrgelenkkinematik angetrieben. Hierzu ist der Antriebslenker einenends gelenkig an der Fahrzeugkarosserie gelagert. Weiterhin ist der Antriebslenker gelenkig mit dem Antriebselement, vorzugsweise einem hydraulischen Stellglied, gelenkig verbunden. Die Steuerrichtung zur Anhebung des Heckdeckels ist bevorzugt für beide Öffnungsbewegungen gleich, wodurch sich insbesondere die Verwendung eines linearen, translatorisch verstellbaren Antriebselementes anbietet. Je nachdem, ob das vordere oder das heckseitige Drehgelenk ver- bzw. entriegelt ist, wird die Vorderkante oder die Hinterkante des Heckdeckels angehoben werden. Die Steuerung der Heckdeckelbewegung erfolgt also über die Steuerung der entsprechenden Verriegelungseinheit.

Gemäß einer bevorzugten Ausführungsform ist die Mehrgelenkkinematik als Siebengelenkkinematik, insbesondere mit vier Lenkern ausgebildet, von denen ein Lenker den Verriegelungslenker bildet, welcher an zwei beabstandeten Stellen drehbar mit der Karosserie verriegelbar ist. Weiterhin umfasst die Siebengelenkkinematik bevorzugt zwei Hublenker. Beide Hublenker sind mit ihren oberen Enden gelenkig am Heckdeckel, insbesondere an einer Längsverstrebung oder einer Konsole des Heckdeckels gelagert. Der erste Hublenker ist andernends gelenkig mit dem Antriebslenker verbunden, wohingegen der zweite Hublenker an den Verriegelungslenker angelenkt ist. In einem mittleren Bereich ist der erste, bevorzugt der vordere Hublenker über ein erstes mittleres Drehgelenk mit dem Verriegelungslenker verbunden. Hierdurch wird ein überzähliger Freiheitsgrad gebunden. Wenn das erste Ende des Verriegelungslenkers gelenkig mit der Fahrzeugkarosserie verbunden ist und das zweite Ende entriegelt ist oder wenn das zweite Ende des Verriegelungslenkers gelenkig mit der Fahrzeugkarosserie verbunden ist und das erste Ende bzw. das vordere Drehgelenk entriegelt ist, besitzt die Mehrgelenkkinematik jeweils genau einen Freiheitsgrad, so dass jeweils eine genau definierte Öffnungsbewegung des Heckdeckelsystems resultiert.

Der Heckdeckel kann einteilig und rahmenfrei ausgeführt sein, da die Art der Öffnungsbewegung des Heckdeckels über die Verund Entriegelung des Verriegelungslenkers gesteuert wird. Der Heckdeckels kann in Leichtbauweise und gegen Knickkräfte instabil ausgebildet werden, da der Heckdeckel keinen eigenständigen Lenker bildet und damit nicht mehr Bestandteil der Mehrgelenkkinematik ist, also auch entsprechende Kräfte nicht mehr aufnehmen muss.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Cabriolet-Fahrzeugs mit einem Hardtop-Fahrzeugdach, bestehend aus zwei Dachteilen, sowie mit einem mittels eines Heckdeckels verschließbaren Verdeckkasten,
- Fig. 2: eine stark schematisierte Darstellung des Heckdeckels mit zugehöriger Mehrgelenkkinematik in geschlossener Position, wobei die Mehrgelenkkinematik einen Verriegelungslenker aufweist, der an zwei beabstandeten Stellen mit der Karosserie verriegelt ist,
- Fig. 3: den Heckdeckel in geschlossener Position, jedoch mit dem vorderen Bereich entriegelten Verriegelungslenker,
- Fig. 4: den Heckdeckel mit aufgeschwenkter Vorderkante zur Überführung des Fahrzeugdaches in den heckseitigen Verdeckkasten,
- Fig. 5: den Heckdeckel in geschlossener Position, wobei der Verriegelungslenker heckseitig entriegelt ist, und
- Fig. 6: den Heckdeckel mit aufgeschwenkter Hinterkante zum Be- und Entladen des Kofferraums.

In den Figuren sind gleiche Bauteile und Bauteile mit gleicher Funktion mit den gleichen Bezugszeichen gekennzeichnet.

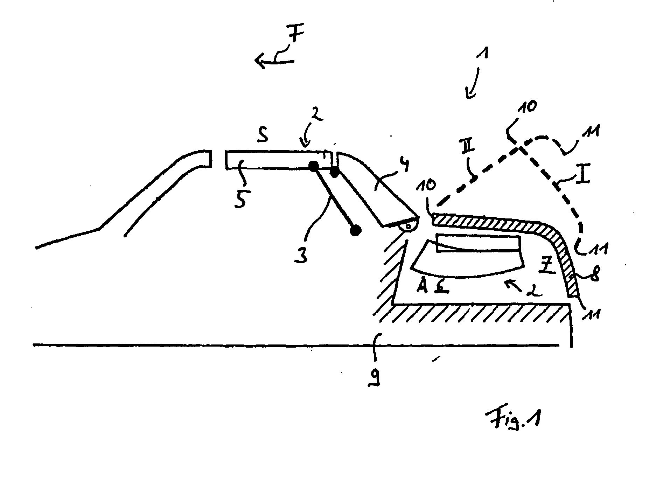

Das in Fig. 1 dargestellte Cabriolet-Fahrzeug 1 weist ein als Hardtopdach ausgebildetes Fahrzeugdach 2 auf. Es liegt im Rahmen der Erfindung, anstelle eines Hardtops ein versenkbares Softtop mit einem auf einem Verdeckgestänge aufgespannten Bezugsstoff einzusetzen. Das Fahrzeugdach ist zwischen einer den Fahrzeuginnenraum überdeckenden Schließposition S und einer Ablageposition A mittels einer schematisch dargestellten Dachkinematik 3 verstellbar. Das Fahrzeugdach 2 besteht aus in Schließposition in Fahrtrichtung F hintereinander angeordneten Dachteilen 4, 5, die in Ablageposition A im Wesentlichen parallel zueinander angeordnet sind.

In der Ablageposition A ist das Fahrzeugdach 2 bzw. sind die starren Dachteile 4, 5 in einem heckseitigen Ablageraum bzw. Verdeckkasten 6 abgelegt, welcher Teil eines Kofferraums 7 sein kann bzw. unmittelbar benachbart zum Kofferraum 7 liegt.

In dem gezeigten Ausführungsbeispiel bilden Verdeckkasten 6 und Kofferraum 7 eine Einheit, so dass im Folgenden aus Vereinfachungsgründen nur vom Verdeckkasten 6 die Rede ist. Der Verdeckkasten 6 des Cabriolet-Fahrzeugs ist von einem Heckdeckel 8 zu verschließen, welcher über eine in Fig. 1 nicht dargestellte Mehrgelenkkinematik verstellbar an die Fahrzeugkarosserie 9 gekoppelt ist. Der Heckdeckel 8 ist von seiner Schließposition, in der er den Verdeckkasten 6 verschließt, in zwei unterschiedliche Öffnungsstellungen mittels der Mehrgelenkkinematik verstellbar. In einer ersten Öffnungsstellung I ist die dem Fahrzeuginnenraum benachbarte in Fahrzeugquerrichtung verlaufende Vorderkante 10 aufgeschwenkt, so dass das Fahrzeugdach 2 zwischen seiner Schließposition S und seiner Ablageposition A verstellt werden kann. In dieser ersten Öffnungsstellung I ist die ebenfalls in Fahrzeugquerrichtung verlaufende Heckkante 11 des Heckdeckels 8 ebenfalls um eine kurze Strecke von der Fahrzeugkarosserie 9 abgehoben.

In der zweiten Öffnungsstellung II ist die Heckkante 11 des Heckdeckels 8 nach oben verschwenkt, um den Kofferraum 7 be-und entladen zu können. Gleichzeitig ist mittels der Mehrgelenkkinematik die Vorderkante 10 des Heckdeckels 8 um eine kurze Strecke von der Fahrzeugkarosserie 9 abgehoben, um eine Kollision des Heckdeckels 8 während der Verschwenkbewegung mit anderen Fahrzeugteilen zu verhindern.

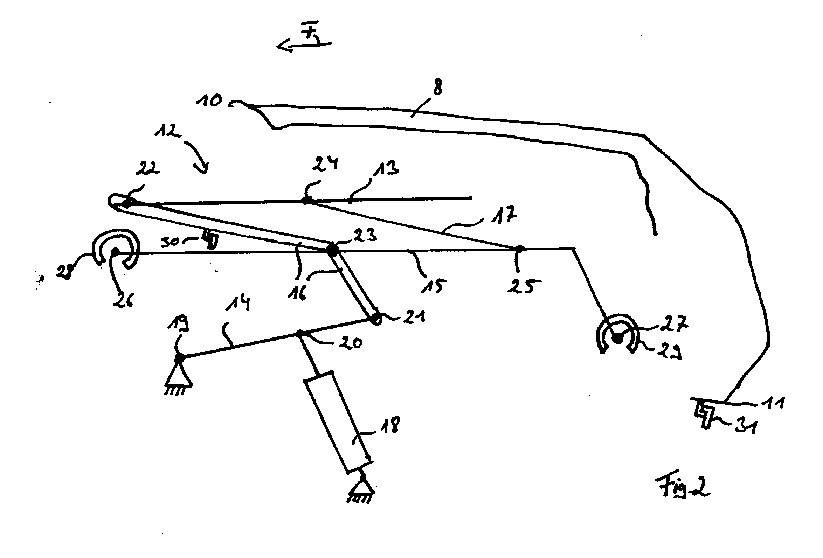

In den Fig. 2 bis 6 ist der Aufbau und die Wirkungsweise der als Siebengelenkkinematik ausgebildeten Mehrgelenkkinematik 12 dargestellt. Aus Übersichtlichkeitsgründen ist der Heckdeckel 8 beabstandet zu der Mehrgelenkkinematik 12 gezeigt. Die Anbindung des Heckdeckels 8 an die Mehrgelenkkinematik 12 erfolgt über eine obere Längsstrebe 13, die Teil des Heckdeckels 8 oder fest mit diesem verbunden ist.

In Fig. 2 ist der Heckdeckel 8 in seiner geschlossenen Position gezeigt. Die Mehrgelenkkinematik 12 umfasst vier Lenker, nämlich einen Antriebslenker 14, einen Verriegelungslenker 15, einen ersten, vorderen Hublenker 16 sowie einen zweiten, hinteren Hublenker 17. Zum Verstellen der Mehrgelenkkinematik 12 ist ein sich an der Fahrzeugkarosserie gelenkig abstützendes, als hydraulisches Stellglied ausgebildetes Antriebselement 18 vorgesehen. Das Antriebselement 18 ist über ein Drehgelenk 20 gelenkig an den Antriebslenker 14 gekoppelt. Dieser ist wiederum über ein Drehgelenk 19, welches mit Abstand zu dem Drehgelenk 20 angeordnet ist, schwenkbar mit der Fahrzeugkarosserie verbunden. Bei einer Betätigung des Antriebselements 18 wird der Antriebslenker 14 mit einem Drehmoment um die Drehachse seines karosserieseitigen Drehgelenks 19 beaufschlagt.

Auf seiner dem Drehgelenk 19 abgewandten Seite ist der Antriebslenker 14 über ein weiteres Drehgelenk 21 schwenkbar mit dem winklig ausgebildeten ersten Hublenker 16 gekoppelt, der anderenends wiederum über ein weiteres Drehgelenk 22 gelenkig mit der Längsstrebe 13 bzw. einer Konsole des Heckdeckels 8 verbunden ist. Zwischen den beiden Drehgelenken 21, 22, im Knickpunkt des ersten Hublenkers 16, befindet sich ein weiteres Drehgelenk 23. Mithilfe dieses Drehgelenks 23 ist der erste Hublenker 16 gelenkig mit dem Verriegelungslenker 15 der Mehrgelenkkinematik 12 verbunden, um überzählige Freiheitsgrade zu binden. Parallel zu dem in Fahrtrichtung F weisenden oberen Schenkel des ersten Hublenkers 16 ist der zweite Hublenker 17 angeordnet. Dieser ist einenends mit einem Drehgelenk 24 gelenkig mit der Längsstrebe 13 und anderenends mit einem Drehgelenk 25 gelenkig mit dem zur Längsstrebe 13 parallelen Verriegelungslenker 15 verbunden. Der Verriegelungslenker 15 ist in seinem heckseitigen Bereich abgewinkelt ausgebildet. Mit seinem vorderen Ende ist der Verriegelungslenker mittels eines Drehgelenks 26 gelenkig an der Fahrzeugkarosserie angebunden. Mit seinem hinteren Ende ist der Verriegelungslenker über ein weiteres Drehgelenk verschwenkbar an die Fahrzeugkarosserie angebunden. Die Drehgelenke 19, 21, 22, 24, 25, 26 und 27 bilden die insgesamt sieben Drehgelenke der Mehrgelenkkinematik 12.

Der Verriegelungslenker 15 ist mit seinem vorderen Ende über das Drehgelenk 26 gelenkig mit der Fahrzeugkarosserie verbunden. Diese gelenkige Verbindung ist durch eine vordere, als Drehfalle ausgebildete automatische Verriegelungseinheit 28 verriegelt. Die Verriegelungseinheit 28 befindet sich also in einer Drehendposition, in der der Verriegelungslenker 15 gelenkig an der Karosserie fixiert ist. Mit seinem heckseitigen Ende ist der Verriegelungslenker 15 über das Drehgelenk 27 an die Karosserie gelenkig angebunden. Diese gelenkige Verbindung ist über eine ebenfalls als Drehfalle ausgebildete hintere Verriegelungseinheit 29 fixiert. Dazu ist die als Drehfalle ausgebildete Verriegelungseinheit 29 ebenfalls in eine Drehendposition verschwenkt, in der ein Herauslösen des Verriegelungslenkers 15 aus der gelenkigen Verbindung zur Fahrzeugkarosserie nicht möglich ist. In dem gezeigten Zustand weist die Mehrgelenkkinematik 12 keinen Freiheitsgrad auf. Um toleranzbedingte Bewegungen der Mehrgelenkkinematik 12 zu unterbinden, ist ein erster Verriegelungsmechanismus 30 vorgesehen, mit dem der erste Hublenker 16 an der Fahrzeugkarosserie fixiert ist. Zusätzlich ist ein zweiter Verriegelungsmechanismus 31 vorgesehen, mit dem der Heckdeckel im Bereich seiner Heckkante 11 an der Fahrzeugkarosserie gesichert ist. Der Verriegelungslenker 15 kann also entweder um das vordere Drehgelenk 26 verschwenkt werden, wobei bei dieser Schwenkbewegung die Heckkante 11 des Heckdeckels 8 angehoben wird oder der Verriegelungslenker kann um das in Fahrtrichtung mit Abstand zu dem Heckdeckel 8 angeordnete Drehgelenk 27 verschwenkt werden, wobei bei dieser Schwenkbewegung die Vorderkante des Heckdeckels' angehoben wird. Beide Schwenkbewegungen werden von dem Antriebselement 18 bewirkt. Die Unterscheidung, welche Schwenkbewegung vorgenommen werden soll, kann durch Ansteuerung der vorderen und der hinteren Verriegelungseinheit 28, 29 realisiert werden.

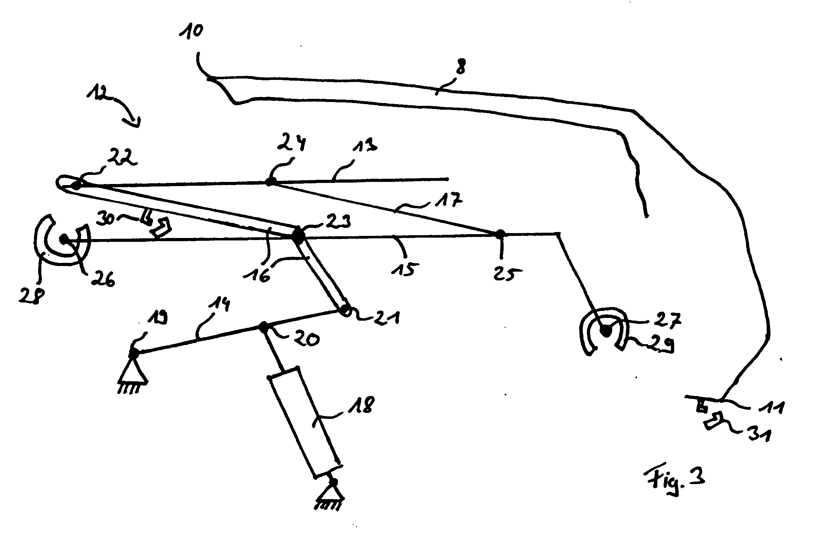

Zum Verschwenken des Verriegelungslenkers 15 um das heckseitige Drehgelenk 27 muss das vordere Drehgelenk 26 bzw. der Verriegelungslenker 15 entriegelt werden. Hierzu wird, wie aus Fig. 3 ersichtlich, die vordere, als Drehfalle ausgebildete Verriegelungseinheit in eine Drehendposition verschwenkt, in der der Verriegelungslenker 15 freigegeben ist. Das Verstellen der Verriegelungseinheit 28 erfolgt automatisch über ein ihr zugeordnetes Stellelement. Weiterhin wurden jeweils über ein Stellelement die Verriegelungsmechanismen 30 und 31 entriegelt, so dass die Mehrfachgelenkkinematik 12 und der Heckdeckel 8 verschwenkbar sind. Durch Beaufschlagen des Antriebslenkers 15 mittels eines Drehmoments durch das Antriebselement 18 wird der Antriebslenker 14 in Gegenuhrzeigersinn um das Drehgelenk 19 verschwenkt. Gleichzeitig wird der untere Schenkel des ersten Hublenkers im Uhrzeigersinn um das Drehgelenk 23 verschwenkt. Gleichzeitig wird dabei der Verriegelungslenker 15 aufgrund der gelenkigen Kopplung mit dem ersten Hublenker 16 über das Drehgelenk 23 angehoben und im Uhrzeigersinn um das heckseitige Drehgelenk 27 verschwenkt. Die heckseitige Gelenkverbindung ist mittels der hinteren Verriegelungseinheit 29 verriegelt. Zeitgleich schwenkt der obere Schenkel des ersten Hublenkers 16 um das Drehgelenk 23 im Uhrzeigersinn, wodurch der Heckdeckel 8 mit seiner Vorderkante 10 angehoben wird. Daneben wird aber auch aufgrund des Anhebens der Längsstrebe 13 die Heckkante 11 des Heckdeckels 8 ein Stück weit nach in der Zeichnungsebene rechts oben von der Fahrzeugkarosserie weg verschwenkt, so dass der Heckdeckel 8 im Bereich der Heckkante 11 nicht mit einem Fahrzeugbauteil während der Schwenkbewegung kollidieren kann.

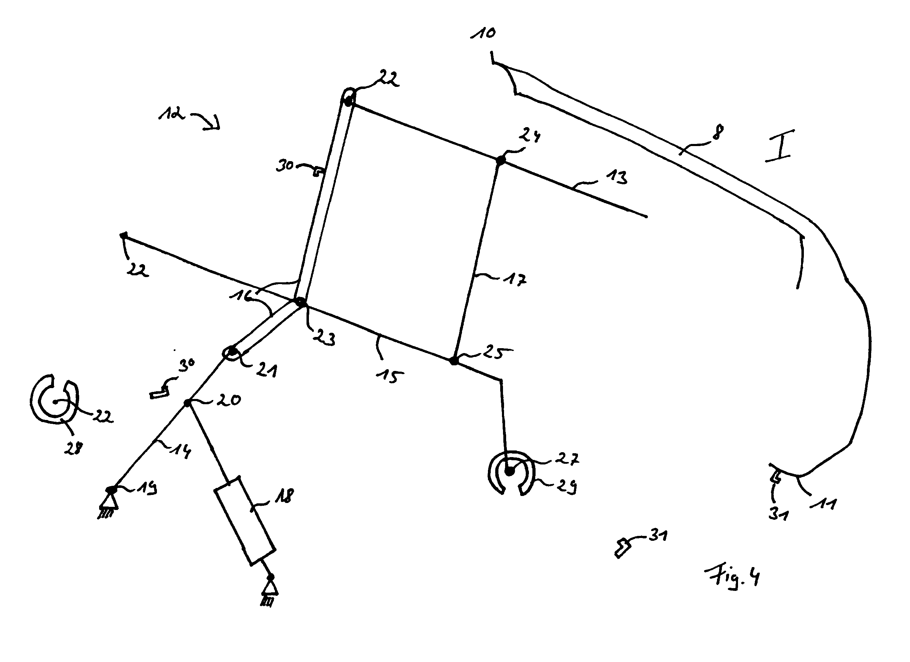

In Fig. 4 ist das Ergebnis der beschriebenen Schwenkbewegung^, also die erste Entriegelungsstellung des Verriegelungslenkers 15 dargestellt. Die Vorderkante 10 des Heckdeckels 8 ist angehoben. Gleichzeitig ist die Heckkante 11 von der Karosserie nach hinten oben weg versetzt. In dieser Position kann das Fahrzeugdach 2 in den Verdeckkasten 6 hinein bzw. aus diesem heraus verschwenkt werden. In dieser Position ist das Antriebselement 18 voll ausgefahren und stützt den Antriebslenker 14 im Drehgelenk 20. Auf den Heckdeckel 8 wirken keine aus der Verschwenkbewegung resultierenden Kräfte. Der Heckdeckel 8 ist nicht Bestandteil der Mehrgelenkkinematik 12, wodurch die Mehrgelenkkinematik 12 theoretisch auch ohne Heckdeckel 8 in die gezeigte Öffnungsposition verschwenkt werden kann.

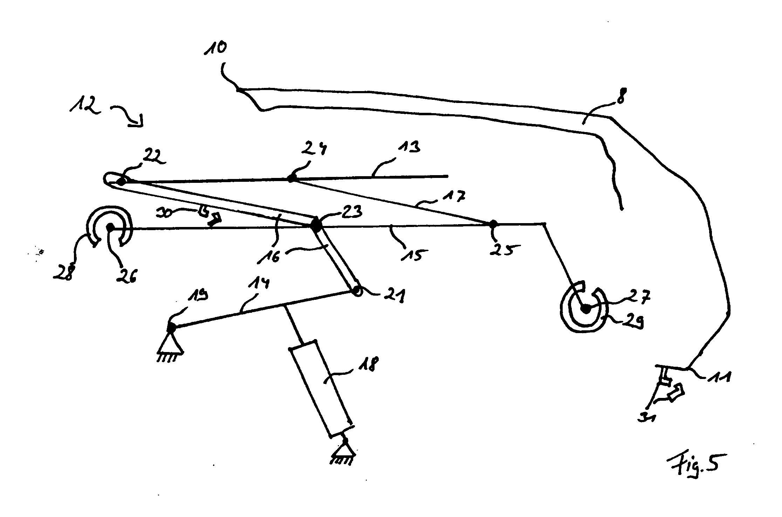

In Fig. 5 ist der Heckdeckel 8 wieder in geschlossener Position dargestellt. Jedoch sind bereits Vorbereitungen zum Verschwenken des Verriegelungslenkers 15 um das vordere Drehgelenk 26 getroffen. Die beiden Verriegelungsmechanismen 30, 31 sind entriegelt. Ferner ist die als Drehfalle ausgebildete Verriegelungseinheit 29 in eine Drehendposition mittels eines Stellgliedes verschwenkt worden, in der der Verriegelungslenker 15 aus der gelenkigen Verbindung mit der Fahrzeugkarosserie herauslösbar ist. Zum Anheben der Heckkante 11 des Heckdeckels 8 wird das Antriebselement 18 betätigt, wodurch wiederum der Antriebslenker 14 um das karosseriefeste Drehgelenk 19 im Gegenuhrzeigersinn verschwenkt wird. Der untere Schenkel des ersten Hublenkers 26 wird dabei im Uhrzeigersinn um das Drehgelenk 23 verdreht und hebt dabei gleichzeitig den Verriegelungslenker 15 an, der dabei im Gegenuhrzeigersinn um das vordere Drehgelenk 26 verschwenkt. Dabei hebt die Heckkante des Heckdeckels 8 von der Karosserie ab. Durch das gleichzeitige Verschwenken des oberen Schenkels des ersten Hublenkers 16 und des zweiten Hublenkers 17 im Uhrzeigersinn um die Drehgelenke 23 und 25 wird auch die Vorderkante 10 ein Stück weit nach in der Zeichnungsebene rechts oben von der Fahrzeugkarosserie angehoben, um eine Kollision während des Verschwenkens des Heckdeckels mit Fahrzeugbauteilen zu verhindern.

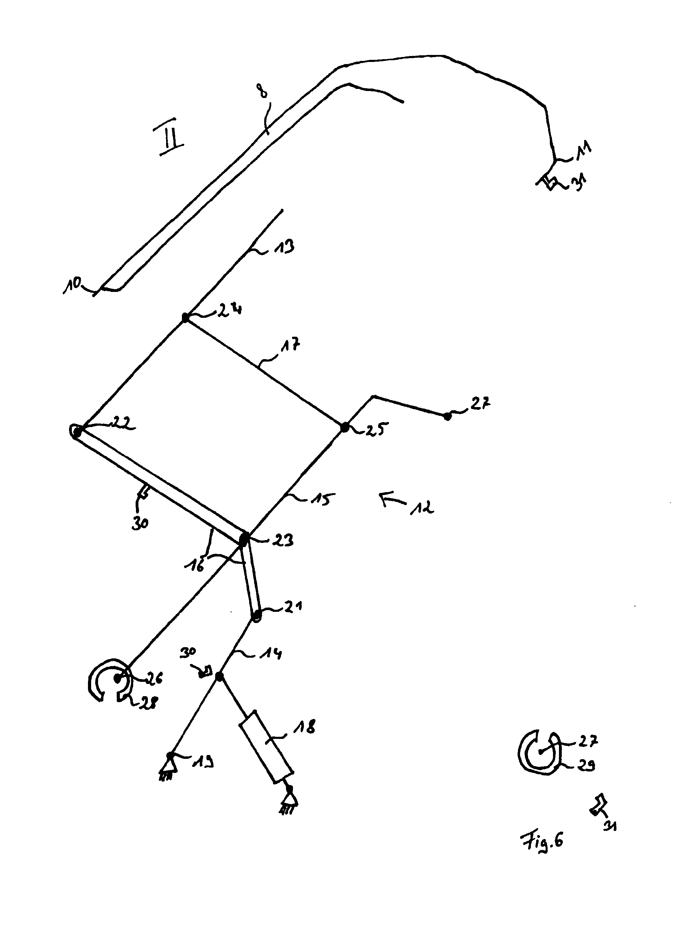

Die zuvor beschriebene Verschwenkbewegung der Mehrgelenkkinematik 12 resultiert in der in Fig. 6 gezeigten zweiten Öffnungsstellung II, bzw. zweiten Entriegelungsstellung des Verriegelungslenkers 15 in der der Kofferraum und/oder der Verdeckkasten beladen werden können.

Aufgrund der Zuordnung des hinteren Drehgelenks 27 zu dem Verriegelungslenker 15 ist es möglich, das hintere Drehgelenk 27 mit Verriegelungseinheit 29 unabhängig von der Position des Heckdeckels 8 an der Fahrzeugkarosserie zu befestigen. Weiterhin werden bei jeder Verschwenkbewegung sowohl die Vorderkante 10 als auch die Hinterkante 11 des Heckdeckels 8 von der Karosserie abgehoben, ohne eine zusätzliche Kinematik oder einen zusätzlichen Antrieb vorsehen zu müssen.

### Bezugszeichenliste

- 1: Cabriolet-Fahrzeug
- 2: Fahrzeugdach
- 3: Dachkinematik
- 4: Dachteil
- 5: Dachteil
- 6: Verdeckkasten
- 7: Kofferraum
- 8: Heckdeckel
- 9: Fahrzeugkarosserie
- 10: Vorderkante
- 11: Heckkante
- 12: Mehrgelenkkinematik
- 13: Längsstrebe
- 14: Antriebslenker
- 15: Verriegelungslenker
- 16: erster Hublenker
- 17: zweiter Hublenker
- 18: Antriebselement
- 19: Drehgelenk
- 20: Drehgelenk
- 21: Drehgelenk
- 22: Drehgelenk
- 23: Drehgelenk
- 24: Drehgelenk
- 25: Drehgelenk
- 26: vorderes Drehgelenk
- 27: hinteres Drehgelenk
- 28: vordere Verriegelungseinheit
- 29: hintere Verriegelungseinheit
- 30: erster Verriegelungsmechanismus
- 31: zweiter Verriegelungsmechanismus

- F: Fahrtrichtung
- S: Schließposition
- A: Ablageposition
- I: erste Öffnungsstellung (zweite Verriegelungsstellung)
- II: zweite Öffnungsstellung (erste Verriegelungsstellung)

## Patentansprüche

1. Cabriolet-Fahrzeug mit einem zwischen einer Schließposition und einer Ablageposition verstellbaren Fahrzeugdach (2), wobei das Fahrzeugdach (2) in seiner Ablageposition in einem Verdeckkasten (6) mit Heckdeckel (8) ablegbar ist, und wobei der Heckdeckel (8) über eine Mehrgelenkkinematik (12) an die Fahrzeugkarosserie (9) gekoppelt ist, und wobei ein die Mehrgelenkkinematik (12) beaufschlagendes Antriebselement (18) zur Überführung des Heckdeckels zwischen einer Schließposition und einer angehobenen Position vorgesehen ist, und wobei ein Verriegelungslenker (15) der Mehrgelenkkinematik (15) zwischen einer ersten Verriegelungsstellung und einer ersten Entriegelungsstellung zu verstellen ist, und wobei der Verriegelungslenker (15) in der ersten Verriegelungsstellung zum Anheben der dem Fahrzeugheck benachbarten Hinterkante des Heckdeckels zum Be- und Entladen des Kofferraumes über ein vorderes Drehgelenk (26) schwenkbar an die Fahrzeugkarosserie (9) gekoppelt ist und in der ersten Entriegelungsstellung das vordere Drehgelenk (26) entriegelt ist und die dem Fahrzeuginnenraum zugewandte Vorderkante (10) des Heckdeckels (8) zum Verschwenken des Fahrzeugdaches (2) anzuheben und der Heckdeckel (8) aufschwenkbar ist,
**dadurch gekennzeichnet,**
**dass** der Verriegelungslenker (15) zwischen einer zweiten Verriegelungsstellung und einer zweiten Entriegelungsstellung zu verstellen ist, wobei der Verriegelungslenker in der zweiten Verriegelungsstellung zum Anheben der Vorderkante des Heckdeckels über ein hinteres Drehgelenk (29) schwenkbar an die Fahrzeugkarosserie gekoppelt ist und in der zweiten Entriegelungsstellung das hintere Drehgelenk (29) entriegelt ist.

2. Cabriolet-Fahrzeug nach Anspruch 1,
**dadurch gekennzeichnet ,**
**dass** dem vorderen und dem hinteren Drehgelenk (26, 29) eine automatische Verriegelungseinheit (28, 29) zugeordnet ist.

3. Cabriolet-Fahrzeug nach Anspruch 2,
**dadurch gekennzeichnet,**
**dass** mindestens eine Verriegelungseinheit (28, 29) als Drehfalle ausgebildet ist.

4. Cabriolet-Fahrzeug nach einem der Ansprüche 2 oder 3,
**dadurch gekennzeichnet,**
**dass** beide Verriegelungseinheiten (28, 29) zumindest während des Normalbetriebs ausschließlich alternativ entriegelbar sind.

5. Cabriolet-Fahrzeug nach einem der vorhergehenden Ansprüche,
**dadurch gekennzeichnet,**
**dass** mindestens ein erster Verriegelungsmechanismus (30) zur Verriegelung der Mehrgelenkkinematik (12), insbesondere eines Lenkers (16) der Mehrgelenkkinematik (12), mit der Fahrzeugkarosserie (9) bei geschlossenem Heckdeckel (8) vorgesehen ist.

6. Cabriolet-Fahrzeug nach einem der vorhergehenden Ansprüche,
**dadurch gekennzeichnet,**
**dass** mindestens ein zweiter Verriegelungsmechanismus (31) zur Verriegelung des geschlossenen Heckdeckels (8) mit der Fahrzeugkarosserie (9) vorgesehen ist.

7. Cabriolet-Fahrzeug nach einem der vorhergehenden Ansprüche,
**dadurch gekennzeichnet,**
**dass** das Fahrzeugdach (2) als Hardtop-Fahrzeugdach mit mindestens zwei starren Dachteilen (4, 5) ausgebildet ist.

8. Cabriolet-Fahrzeug nach einem der vorhergehenden Ansprüche,
**dadurch gekennzeichnet,**
**dass** die Mehrgelenkkinematik (12) einen von dem Antriebselement (18) beaufschlagten, an der Fahrzeugkarosserie (9) gelenkig gelagerten Antriebslenker (14) umfasst.

9. Cabriolet-Fahrzeug nach einem der vorhergehenden Ansprüche,
**dadurch gekennzeichnet,**
**dass** die Mehrgelenkkinematik (12) als Siebengelenkkinematik ausgebildet ist.

10. Cabriolet-Fahrzeug nach Anspruch 9,
**dadurch gekennzeichnet,**
**dass** die Siebengelenkkinematik insgesamt vier Lenker (14, 15, 16, 17) umfasst:
- einen an der Fahrzeugkarosserie gelenkig gelagerten Antriebslenker (14),
- einen ersten, einenends gelenkig mit dem Antriebslenker gekoppelten Hublenker (16), welcher anderenends gelenkig mit dem Heckdeckel (8) verbunden ist,
- einen Verriegelungslenker (15), der einenends gelenkig mit der Fahrzeugkarosserie (9), über ein erstes mittleres Drehgelenk (23) mit dem ersten Hublenker (16), über ein zweites mittleres Drehgelenk (25) gelenkig mit einem zweiten Hublenker (17), und anderenends gelenkig mit der Fahrzeugkarosserie (9) gekoppelt ist,
- den zweiten Hublenker (17), welcher auf der dem Verriegelungslenker (15) abgewandten Seite gelenkig mit dem Heckdeckel (8) verbunden ist.

11. Cabriolet-Fahrzeug nach einem der vorhergehenden Ansprüche,
**dadurch gekennzeichnet,**
**dass** das Antriebselement (18) als hydraulisches Stellglied ausgeführt ist.

12. Cabriolet-Fahrzeug nach einem der vorhergehenden Ansprüche,
**gekennzeichnet durch**
eine einteilige, rahmenfreie Ausführung des Heckdeckels (8).

13. Cabriolet-Fahrzeug nach einem der vorhergehenden Ansprüche,
**dadurch gekennzeichnet,**
**dass** die Stellrichtung des Antriebselements (18) für das Anheben der Vorderkante (10) und das Anheben der Hinterkante (11) des Heckdeckels (8) gleich ist.
